(19) Europäisches Patentamt
European Patent Office
Office européen des brevets

(11) **EP 1 884 399 A2**

(12) **EUROPEAN PATENT APPLICATION**

(43) Date of publication:
**06.02.2008 Bulletin 2008/06**

(51) Int Cl.:
**B60L 11/18** *(2006.01)*

(21) Application number: **07015083.4**

(22) Date of filing: **01.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **02.08.2006 IT GE20060078**

(71) Applicant: **Selin Sistemi S.p.A.**
**16153 Genova (IT)**

(72) Inventors:
• **Pallottini, Alberto**
**16153 Genova (IT)**
• **Lotti, Fabio**
**16153 Genova (IT)**

(74) Representative: **Pennacino, Enrico**
**Porsia & Associati S.r.l.**
**Via Brigata Liguria 3/16 A**
**16121 Genova (IT)**

(54) **Control system for electric-drive vehicles**

(57) Control apparatus for electric drive vehicles comprising a low-voltage electric power source (1), a low-voltage inverter (3), a high-frequency transformer (4), a high-voltage inverter (5), a three-phase inverter (6) coupled to an electric motor (7), and a central processing unit (10) coupled to all the other components of the apparatus, means for detecting revolution speed and position of the axis of said motor being provided, and method to manage said apparatus.

Fig.1

EP 1 884 399 A2

**Description**

The present invention relates to electric drive vehicles, and in particular to a control system for vehicles provided with an electrical motor, either alone or in hybrid combination with an internal combustion engine.

Energy conversion systems both of electrical vehicles and hybrid vehicles include a number of components comprising a drive inverter module and a DC/DC converter. The drive inverter is also known as electric power inverter, and it is used to convert direct current (DC) into alternating current (AC) to power an electric motor, such direct current being delivered by a high-voltage energy storage device, i.e. a battery. This power is converted to actuate and control the motor, i.e. to generate a suitable torque for delivering drive power to the vehicle. The DC/DC converter is used to bring the voltage to an acceptable level for an alternator, i.e. an auxiliary battery, which is usually apart from a main battery (the high-voltage battery). In order to obtain more acceptable results, a pulse-width modulation system is normally used.

US 7012822 discloses an integrated power conversion system for use in an electric vehicle provided with an electric motor comprising a primary high-voltage power source, an auxiliary low-voltage power source, a three-phase inverter operable to convert a voltage generated by the high-voltage power source into an alternating current so as to deliver drive power to the electric motor, and a DC/DC converter operable to step-down or step-up a voltage of the primary or auxiliary power source, respectively, to a level which can be used at the auxiliary or primary power source, respectively. This type of system has some problems. Firstly, as for the yield of the system, this kind of solution is poorly adaptable to the torque requirements which can exist at the drive shaft. In this way, though delivered power can be high, the yield of the system is quite small.

Secondly, the use of a primary high-voltage power source of about 400-500 V requires the use of very expensive and/or cumbersome energy storage devices. This aspect can greatly limit the application for this type of technology, and it affects negatively the costs and/or weight of the vehicle in which the system is installed.

An aim of the present invention is to provide a control system for electric drive vehicles which is able to deliver power to a motor according to continuously varying power requirements, so as to allow a better control of the yields. Another aim of the invention is to provide a system which has a reduced size and weight to increase adaptability.

Accordingly, an object of the present invention is a control apparatus for electric drive vehicles comprising a low-voltage electric power source, a low-voltage inverter, a high-frequency transformer, a high-voltage inverter, a three-phase inverter coupled to an electric motor, and a central processing unit coupled to all the other components of the apparatus, means for detecting revolution speed and position of the axis of said motor being provided. In an embodiment of the invention, a chopper is arranged between the low-voltage electric power source and the low-voltage inverter. Furthermore, a low-voltage recovering circuit and a high-voltage recovering circuit can be provided in the respective portions of the system. Furthermore, one or more capacitive components are arranged between said high-voltage inverter and said three-phase inverter.

The system is completely bi-directional, i.e. it can either transfer power to the axis of the motor, or take power from the axis to store it as electric energy in the power source.

Another object of the present invention is a method to manage an apparatus of the above-described type, comprising the steps of:

- acquiring data relative to voltage, current intensity and state of charge of the batteries, and acquiring data relative to the axis of the motor;
- controlling the voltage output to the motor according to the torque requirement resulting from acquired data;
- adjusting generator operation according to the voltage and current intensity data acquired for the batteries.

In a preferred embodiment, output voltage is controlled by conveniently controlling the diodes of the low-voltage inverter. Preferably, the inverter is controlled according to a comparison of the voltage of the inverter and the voltage of the capacitors.

Other advantages and features of the apparatus and method according to the present invention will be apparent from the following detailed description of an embodiment thereof, which is provided by way of illustration, and not by way of limitation, with reference to the accompanying drawings, wherein:

Figure 1 is a schematic block diagram showing the apparatus according to the present invention;
Figures 2 to 6 are schematic diagrams showing the electrical wiring diagram of an embodiment of the apparatus according to the invention;
Figures 7 to 9 are schematic diagrams showing a control logic for the apparatus according to the invention;
Figures 10 to 12 are flowcharts showing different operation steps and modes for the apparatus according to the invention;
Figure 13 is a schematic diagram showing a charge system for the apparatus according to the invention; and

Figure 14 is a diagram showing an operation mode for a portion of the apparatus according to the invention.

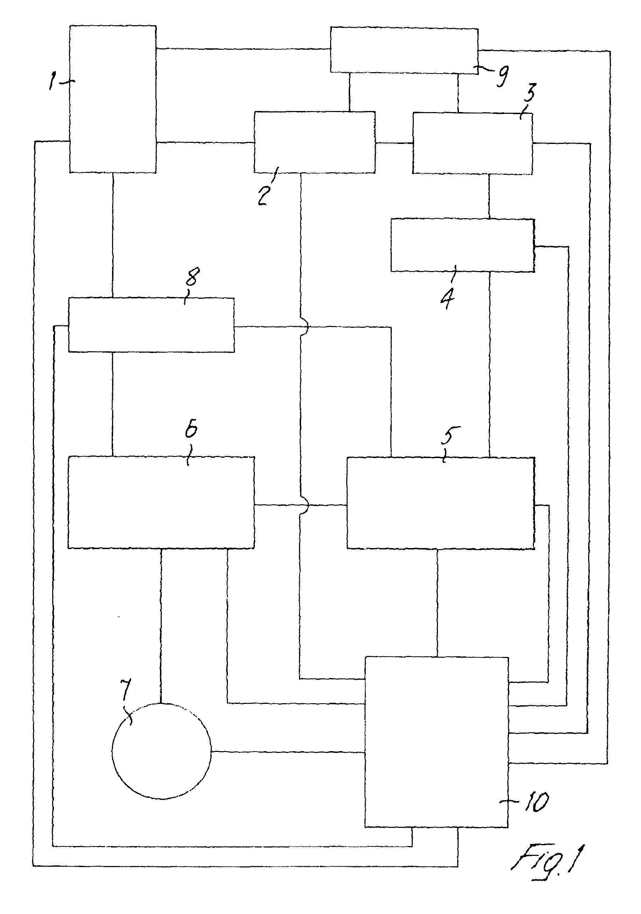

Figure 1 shows the block diagram of an apparatus according to the present invention; reference numeral 1 denotes an electric power source for the apparatus, i.e. a low-voltage battery of about 12-120 V, said electric power source 1 being coupled to a chopper 2 which in turn is coupled to a low-voltage inverter 3 coupled to a high-voltage inverter 5 through a high-frequency transformer 4. In turn, the high-voltage inverter 5 is coupled to a three-phase inverter 6 which delivers alternating current to an electric motor 7. All above-mentioned components are interfaced to a central processing unit 10.

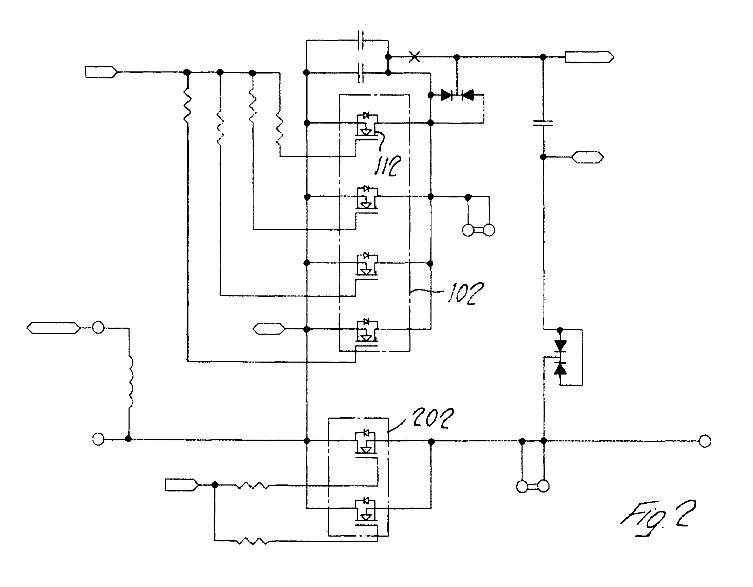

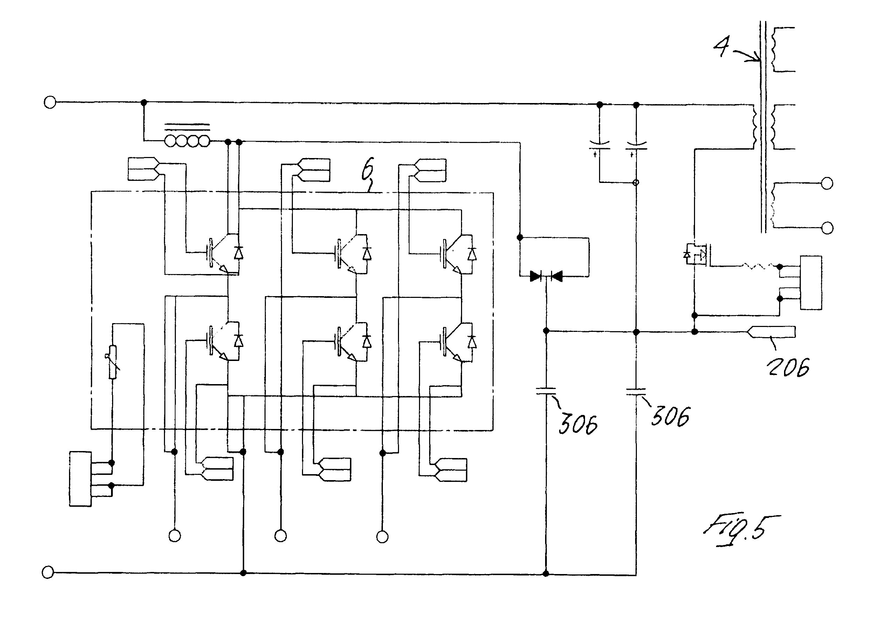

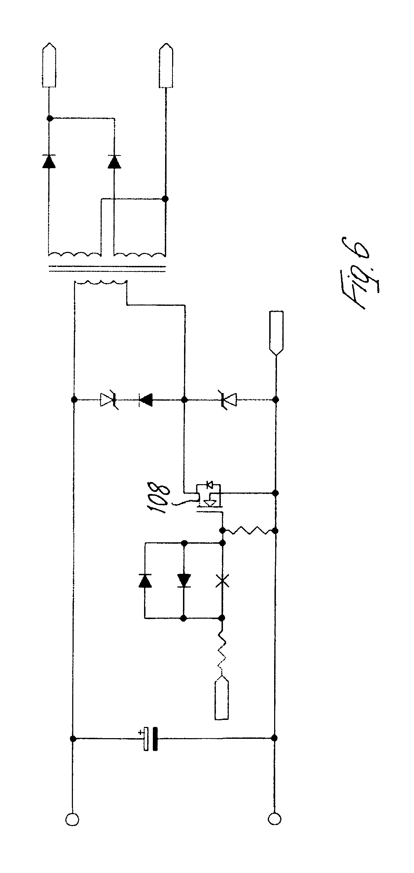

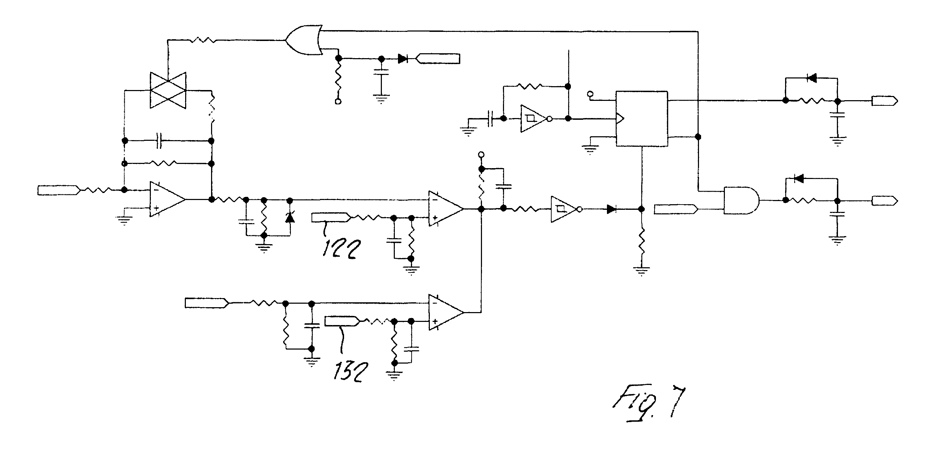

Figure 2 shows the exemplary circuit diagram of the chopper 2. A chopper is a switching circuit used to control an electric signal. In this case, the chopper performs a current limiting function during pre-charge phase and motor operation when it is desired to limit current delivered by batteries, either under normal use conditions or in case of malfunctions (short-circuits) of downstream components. The chopper includes switches 102, 202 which are consisting of FETs (field-effect transistors) 112. The chopper is controlled by a control logic managed by feedback according to the high-voltage bus voltage and the battery current. Figure 7 is a diagram showing the control logic of the chopper; the central processing unit 10 provides a reference voltage value RefV_chop and a reference current value RefI_chop as indicated by reference numerals 122 and 132 in Figure 7, respectively. These reference values are always given with a ramp starting from a zero value and ending at a final limit value, such as the system is not unstable.

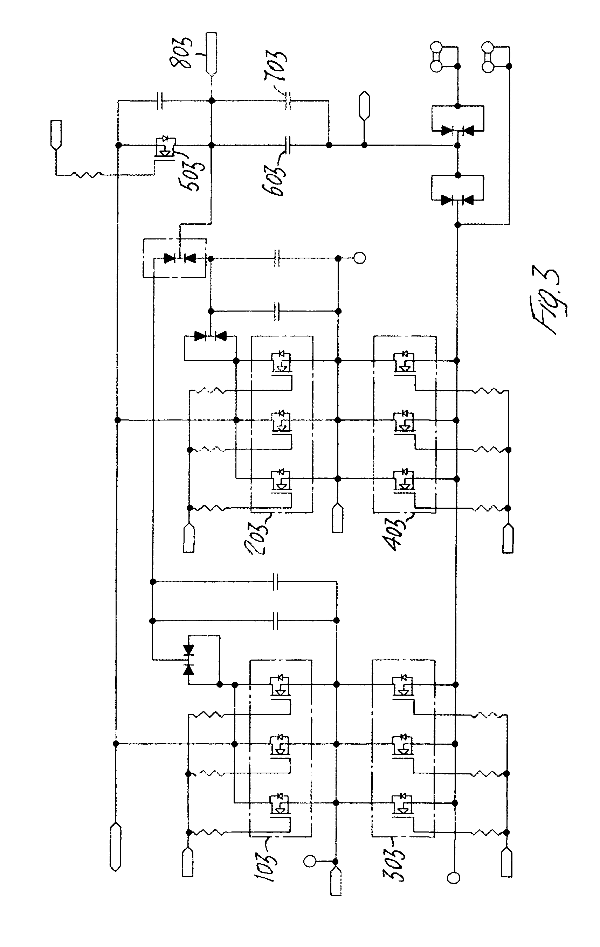

Figure 3 shows the electrical wiring diagram of the low-voltage inverter 3; switches 103, 203, 303 and 403 of the inverter are each consisting of three FETs 113. The low-voltage inverter 3 transfers power from the chopper, and therefore from the battery, to the three-phase inverter 6 through the high-frequency transformer 4 and the high-voltage inverter 5.

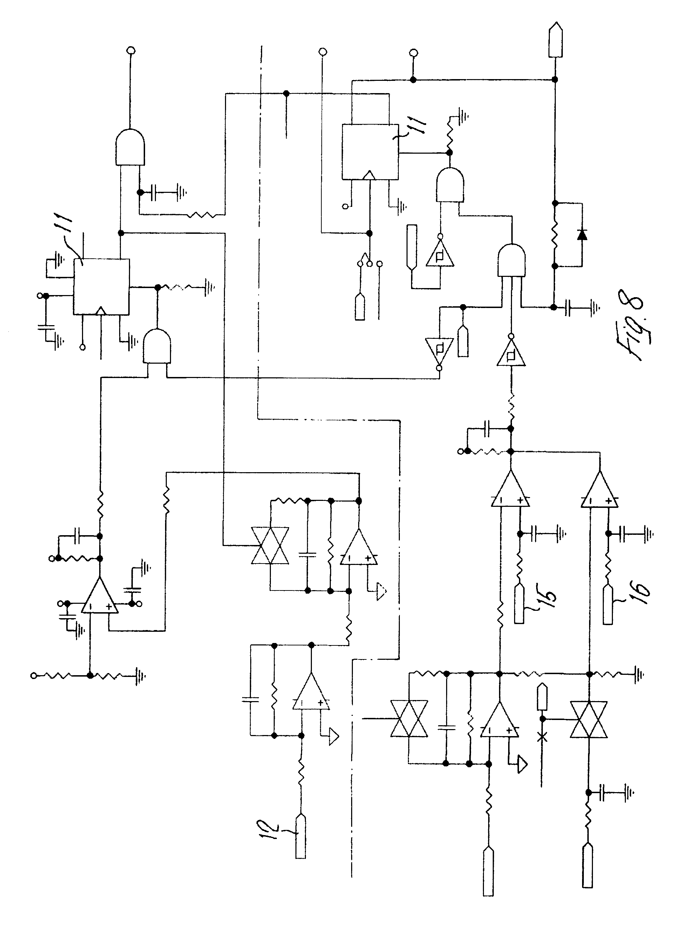

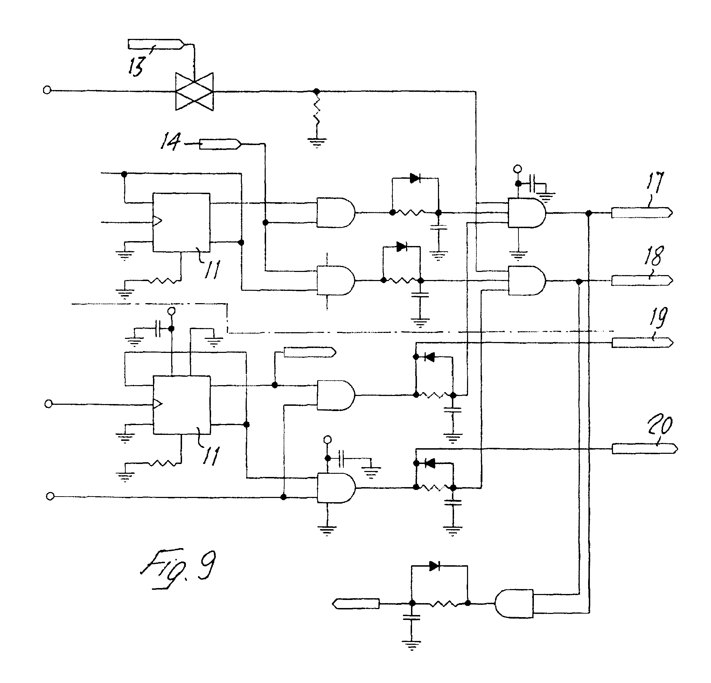

Modulation and control of the low-voltage inverter are performed by a control logic illustrated in Figures 8 and 9, which provides controls termed IN_BRIDGE_A and IN_BRIDGE_B as indicated by reference numerals 17 and 18 in Figure 9, respectively. The input H-bridge is controlled by simultaneously turning ON the positive switch 103 or 203 of one leg and the negative switch 303 or 403 of the other leg, and overlapping them with the control of the other two switches for a time period ranging from 0 to 50%.

As it can be seen from the diagrams of Figures 8 and 9, the switches are turned ON by a series of flip-flops 11 having an operating frequency of 100KHz. Therefore, since these flip-flops 11 are used in a frequency dividing arrangement, the controls will have a frequency of 50KHz.

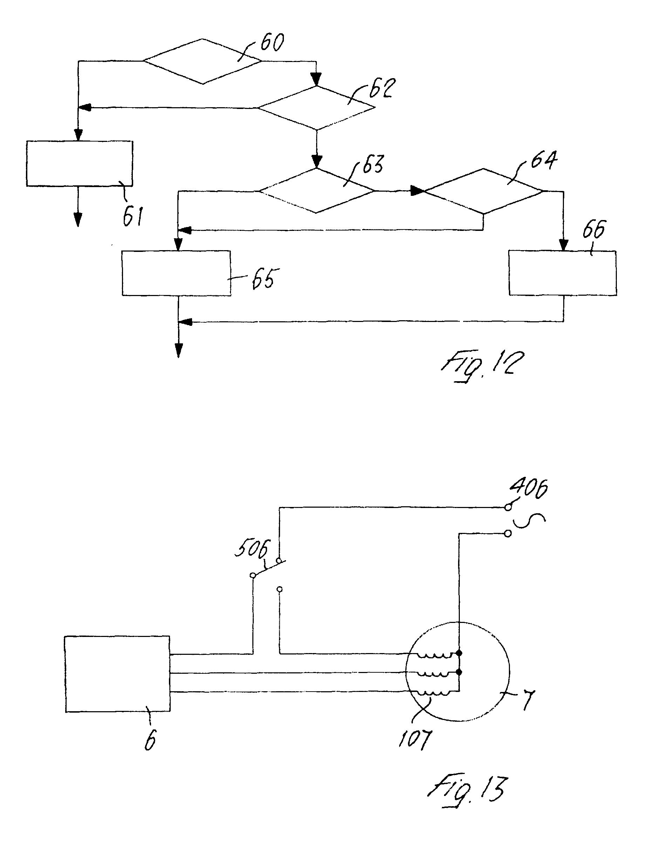

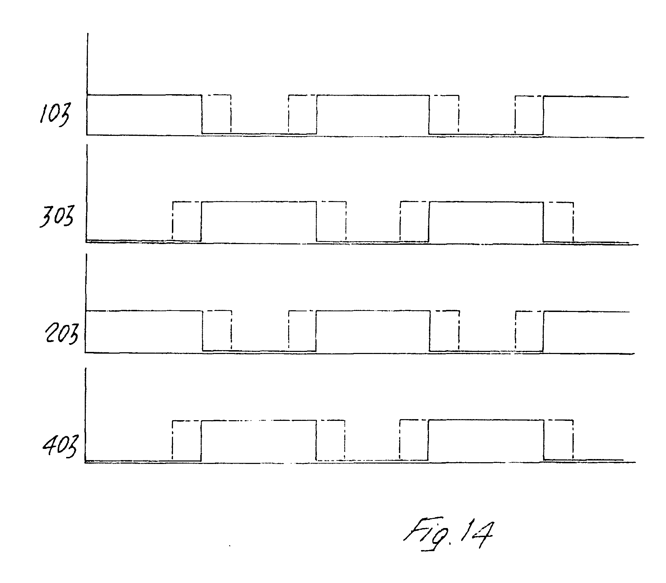

Overlapping of switches enables to increase voltage beyond the turns ratio. The turns ratio is normally 1/8 (1 turn in the primary winding and 8 turns in the secondary winding). In this way, with a 36V battery, it is possible to have a voltage of 36*8=288V at the high-voltage bus. In certain operating modes it could be necessary to increase the output voltage of the transformer even up to 400V, as explained in detail below. This mode is managed by the central processing unit 10 which allows to enable a BOOSTER mode, as indicated by reference numeral 14 in Figure 9, through a signal OVLAP_EN (13), while providing a reference value RefVm (12) to increase or reduce the overlapping. In Figure 14 it is possible to see temporal diagrams for the controls of the switches. Each of these diagrams refers to the control of one of the four switches in Figure 3; the opening phase variation of each switch is indicated by a chain line, such variation being caused by the control of that switch. In practice, an overlapping of the opening phases of the positive and negative switches on one leg of the inverter increases the voltage; voltage value is controlled by feedback, i.e. measuring and appropriately adjusting the voltage when overlapping interval changes.

The control logic shown in Figures 8 and 9 is as follows: the portion above the broken line illustrates the control of the inverter 3 when the apparatus is operated as a motor, while the portion under the broken line depicts the control in generator mode; the two controls enclosed by the chain line are used for both the modes.

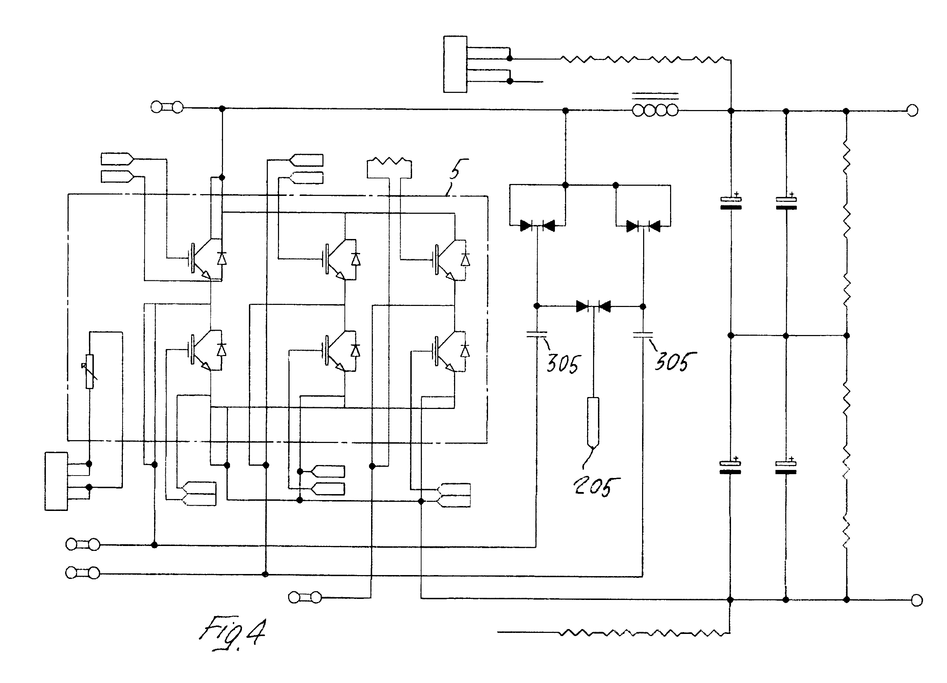

Figure 4 illustrates the high-voltage inverter 5; when in motor mode, the high-voltage inverter 5 is used to rectify the voltage outputted by the high-frequency transformer. In this stage, the switches (in the present application, 600V-IGBTs 105 (Insulated Gate Bipolar Transistors) are employed) are used as diodes (IGBTs in OFF status). When in generator mode, these switches are controlled to widen or narrow the duty-cycle so as to increase or reduce battery voltage. The duty-cycle of the bridge is monitored by a logic managed by feedback according to the bus voltage, and it is controlled by a reference voltage value RefVcb, as indicated by reference numeral 15 in Figure 8, and a reference current value RefIcb (16) from the central processing unit 10, usually a DSP, i.e. a digital signal processor, which knows the state of charge (SOC), the voltage of the batteries and their absorbed current in every moment. A diagram of this control logic can be seen in Figure 9, where the control outputs for the IGBTs are OUT_BRIDGE_A and OUT_BRIDGE_B, as indicated by reference numerals 19 and 20 in Figure 9, respectively. Furthermore, these outputs also control that input FETs are synchronously turned on.

Figure 5 illustrates the electrical wiring diagram of the three-phase inverter 6, which is an IGBT inverter 106 having an operating frequency of 15 kHz in the on-vehicle operation mode, and an operating frequency of 40 kHz in the battery charge operation mode. This inverter works in pulse-width modulation (PWM), and the modulation control is entirely managed by the central processing unit 10 through the current control, the management of the motor axis position sensor and the generation of sinusoids.

Figure 5 shows also the high-frequency transformer 4, preferably a transformer comprising a planar core and windings on a printed circuit board with a turns ratio of 1:8. The operating frequency of the high-frequency transformer ranges from 40 kHz in generator mode to 50 kHz in motor mode.

Figure 6 illustrates the electrical wiring diagram of the recovering circuits as indicated by reference numerals 8 and 9 in Figure 1. With reference to the low-voltage recovering circuit in Figure 3, a switch 503 discharges the capacitors 603 and 703 into the circuit of Figure 6 through an output 803, where a FET 108 is controlled at a high frequency of 130 kHz; this circuit transfers power to the batteries in order to increase the yield of the electronic components. The switch 503 is controlled so as to be kept ON during the nonoverlapping intervals of the switches 103, 203, 303, 403 (see Figure 15). Similarly, the high-voltage inverter 5 and the three-phase inverter 6 discharge respective capacitors 305 and 306 into a circuit similar to that shown in Figure 6 through outputs 205 and 206, respectively.

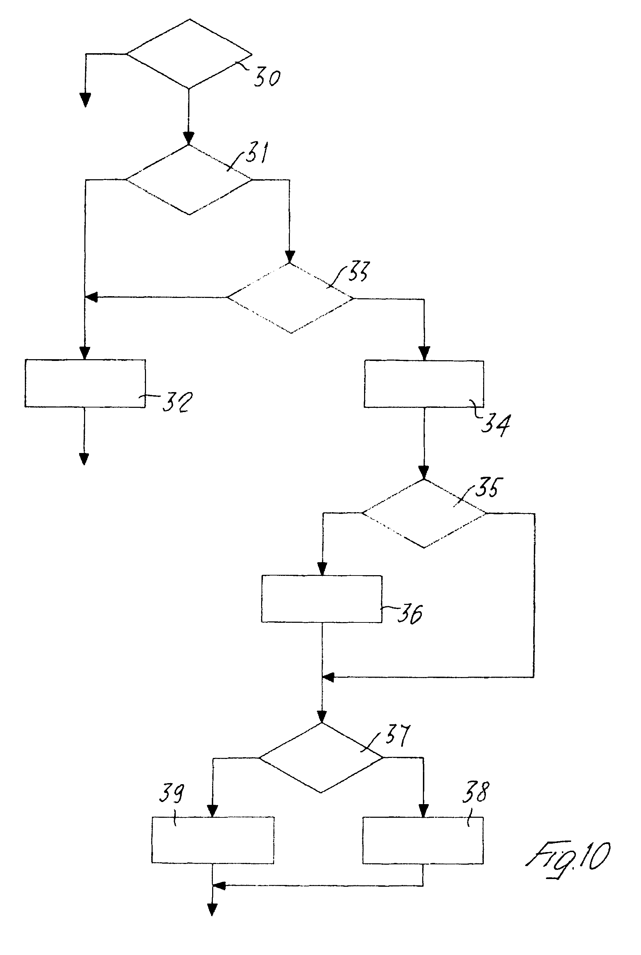

The method to control the apparatus according to the present invention will be apparent from the following description with reference to Figures 10 to 13, which are flowcharts showing the operation of the apparatus itself. Figure 10 is a flowchart showing the operation of the chopper 2 as illustrated in Figure 2; the chopper 2 is managed only in the motor mode, while the chopper is kept OFF when current is transferred to the batteries. As shown in Figure, after a suitable delay as indicated by reference numeral 30, a test to verify the ON/OFF status 31 is carried out. If the answer is negative, the chopper is disabled (step 32), on the contrary the test proceeds by checking a request for enabling the chopper (step 33), which can result in actually enabling the device (step 34). Subsequently, a ramp is started to limit current according to a reference value Refl_chop, which can be 140A for example, with controlling (35) and increasing (36) steps. The same operation is carried out for the reference voltage value RefV_chop, for example against a value of 250 V.

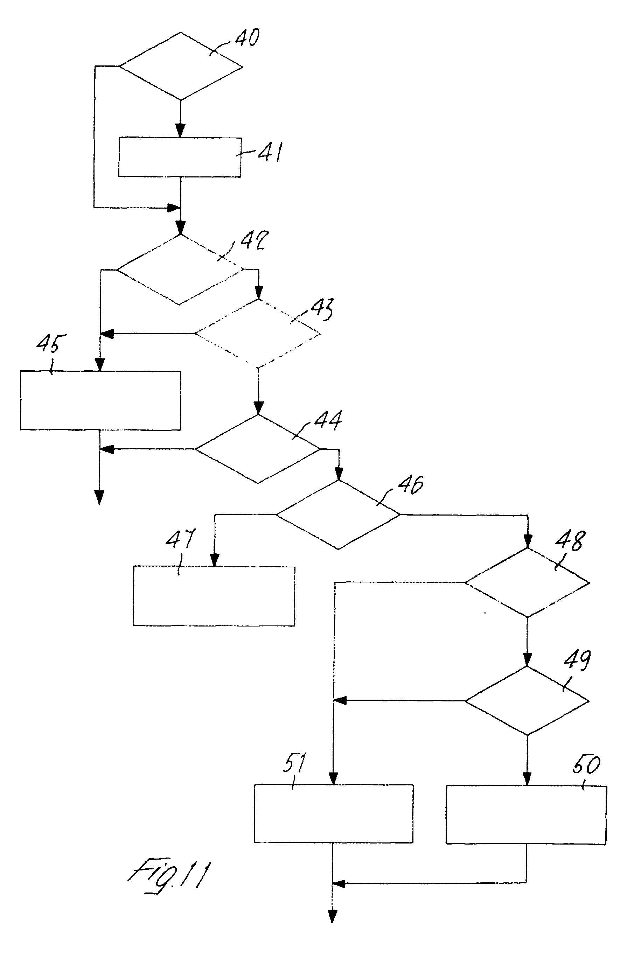

Figure 11 is a diagram showing how to manage the low-voltage inverter 3. The value Vinv_ref is computed by the central processing unit, i.e. the DSP 10, according to the relationship:

$$\mathrm{Vinv\_ref} = 1{,}78 * \sqrt{(vd\_n^2 + vq\_n^2)}$$

which relationship takes in account voltage references vd_n and vq_n. Once this amount is computed, it is compared (step 40) with a reference value of 350 V, for example, and then it is made equal to such value (step 41); this step is followed by an turning-on check test (step 42), a test to check a request for enabling the motor (step 43), and a delay 44. In any of the above-mentioned tests, a negative answer results in a reset of the system (45). Subsequently, the torque requirement of the motor is checked (46), and if said torque requirement is greater then zero, the axis velocity is tested (step 48) against a reference spin value of 3400 rpm, for example. Based on such test, it is determined if the previously computed reference voltage value for the inverter is greater or lesser than the voltage at the capacitors (step 49). In the first case, the overlapping of the turning-on intervals for the switches of the inverter is increased (step 50), while in the second case such overlapping is reduced (step 51).

Figure 12 illustrates how to manage the high-voltage inverter. A routine turning-on check test is carried out at step 60 and, if such test is negative, this results in a reset condition 61. Then, a request for enabling the generator operation (step 62) is checked, and again a negative answer results in the reset condition 61. Then, two check tests are performed for voltage values (step 63) and current values (step 64) of the battery against reference data. Duty-cycle will be increased (step 66) or reduced (step 65) according to the result of this test. Note that such reference values are not constant, since they can change according to the state of charge of the batteries and operation requirements set by a driver of the vehicle.

Figure 13 illustrates a variant embodiment of the apparatus according to the present invention. The three-phase inverter 6 is coupled to the motor 7 and to a plug 406 which provides an electrical connection to the AC mains. The three-phase inverter 6 is used as a battery charger through a switch 506, and the inductance 107 of the motor 7 is used as an input inductance. Charge step will be entirely managed by DSP 10 through an algorithm which provides for the generation of an error between the voltage across the capacitors and the reference voltage value, the latter being continuously computed by DSP according to the state of charge of the batteries and the charge mode. The above-mentioned error, along with the detected phase current, allow the determination of a reference for the values to be compared with the internal timers, in order to control the switches.

Therefore, the apparatus of the present invention is able to solve several problems which have affected the prior art, since it allows a very versatile management of a low-voltage electric power source to obtain great results as for the delivered power. This apparatus has a great variety of potential uses for hybrid drive vehicles in which the torque distribution of the two drive systems, i.e. the electric motor and the internal combustion engine, allows a virtually total compensation relative to the needs of the vehicle itself.

In particular, this type of solution is specially advantageous for those vehicles which need to substantially reduce loads as motorcycles and the like.

**Claims**

1.  Control apparatus for electric drive vehicles comprising a low-voltage electric power source (1), a low-voltage inverter (3), a high-frequency transformer (4), a high-voltage inverter (5), a three-phase inverter (6) coupled to an electric motor (7), and a central processing unit (10) coupled to all the other components of the apparatus, means for detecting revolution speed and position of the axis of said motor being provided.

2.  Apparatus according to Claim 1, wherein a chopper (2) is arranged between said low-voltage electric power source (1) and said low-voltage inverter (3), said chopper (2) being coupled to said central processing unit (10).

3.  Apparatus according to Claim 1 or 2, wherein a low-voltage recovering circuit (8) and a high-voltage recovering circuit (9) are provided in the respective portions of the apparatus.

4.  Apparatus according to any one of Claims 1 to 3, wherein one or more capacitive components are arranged between said high-voltage inverter (5) and said three-phase inverter (6).

5.  Apparatus according to any one of Claims 1 to 4, wherein said low-voltage inverter (3) includes two pairs of switches (103, 203, 303, 403), each switch comprising one ore more diodes (113) controlled by said central unit (10).

6.  Apparatus according to Claim 5, wherein said diodes (113) are FETs.

7.  Apparatus according to any one of Claims 1 to 6, wherein said high-frequency transformer (4) is a transformer comprising a planar core and windings on a printed circuit board with a turns ratio from 1:5 to 1:12, and preferably of 1:8.

8.  Apparatus according to Claim 7, wherein the operating frequency of said transformer (4) is 40 kHz in generator mode, and 50 kHz in motor mode.

9.  Apparatus according to any one of Claims 1 to 8, wherein said high-voltage inverter (5) comprises 600V-IGBTs as switches.

10. Apparatus according to any one of Claims 1 to 9, wherein said three-phase inverter (6) is coupled to said motor (7) and to a plug (406) which provides an electrical connection to alternating current mains, said three-phase inverter (6) being used as a battery charger through a switch (506), the inductance (107) of said motor (7) being used as an input inductance.

11. Method to manage a control apparatus for electric drive vehicles comprising a low-voltage electric power source (1), a low-voltage inverter (3), a high-frequency transformer (4), a high-voltage inverter (5), a three-phase inverter (6) coupled to an electric motor (7), and a central processing unit (10) coupled to all the other components of the apparatus, means for detecting revolution speed and position of the axis of said motor being provided, said method comprising the steps of:

    - acquiring data relative to voltage, current intensity and state of charge of the batteries, and acquiring data relative to the axis of the motor;
    - controlling the voltage output to the motor according to the torque requirement resulting from acquired data;
    - adjusting generator operation according to the voltage and current intensity data acquired for the electric power source.

12. Method according to Claim 11, wherein said step of controlling the voltage output to the motor according to the torque requirement resulting from acquired data comprises the sub-steps of:

    - determining the value of Vinv_ref according to the relationship:

$$Vinv\_ref = 1,78 * \sqrt{(vd\_n^2 + vq\_n^2)}$$

which relationship takes in account voltage references vd_n and vq_n;
- comparing said value to a reference voltage value;
- making the value of Vinv_ref equal to the reference voltage value;
- checking the turning-on and checking a request for enabling the motor;
- checking the torque requirement of the motor;
- checking the axis velocity against a reference spin value;
- based on said check, determining if the previously computed reference voltage value for the inverter is greater or lesser than the voltage at the capacitors;
- if Vinv_ref is greater than the voltage at the capacitors, increasing the overlapping of the turning-on intervals for the switches of the inverter, on the contrary reducing said overlapping.

Fig.1

EP 1 884 399 A2

Fig. 2

Fig.3

Fig. 4

Fig.5

Fig. 6

Fig. 7

122

132

Fig. 8

Fig. 9

Fig.10

Fig. 11

Fig. 12

Fig. 13

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7012822 B